# EUROPEAN PATENT APPLICATION

(11) **EP 4 629 313 A1**
(43) Date of publication of application: **08.10.2025**
(21) Application number: 24838252.5
(22) Date of filing: 16.01.2024
(51) Int. Cl.: H01M 4/13, H01M 4/131, H01M 4/134, H01M 10/052

(54) **NEGATIVE ELECTRODE SHEET, SECONDARY BATTERY AND ELECTRICAL APPARATUS**

(30) Priority: 11.07.2023 CN 202310847301
(71) Applicant: Contemporary Amperex Technology Co., Limited, Ningde, Fujian 352100 (CN)
(72) Inventor: LV, Zijian, Ningde, Fujian 352100 (CN); WANG, Jiazheng, Ningde, Fujian 352100 (CN); CHEN, Wenqiang, Ningde, Fujian 352100 (CN); DENG, Jingxian, Ningde, Fujian 352100 (CN); GUO, Xiaoxin, Ningde, Fujian 352100 (CN)
(74) Representative: Thoma, Michael
(86) International application number: PCT/CN2024/072585
(87) International publication number: WO 2025/010988

(57) **Abstract**

This application provides a negative electrode plate, a secondary battery, and an electric apparatus. The negative electrode plate includes a negative electrode current collector, a first active layer and a second active layer disposed on at least one surface of the negative electrode current collector, where the first active layer is between the negative electrode current collector and the second active layer, the first active layer includes a first silicon-based material, the second active layer includes a second silicon-based material, a sphericity of the first silicon-based material is greater than a sphericity of the second silicon-based material, and the sphericity of the first silicon-based material is greater than or equal to 0.6.

## Description

### CROSS-REFERENCE TO RELATED APPLICATIONS

This application claims priority to Chinese Patent Application No. 2023108473017, filed on July 11, 2023, and entitled "NEGATIVE ELECTRODE PLATE, SECONDARY BATTERY, AND ELECTRIC APPARATUS", which is incorporated herein by reference in its entirety.

### TECHNICAL FIELD

This application pertains to the field of secondary battery technology, and in particular, to a negative electrode plate, a secondary battery, and an electric apparatus.

### BACKGROUND

The statements herein merely provide background information related to this application and do not necessarily constitute prior art.

In secondary batteries, the use of silicon-based materials can effectively improve energy densities of the batteries. However, after charging the battery, structural stability of electrode plates containing the silicon-based materials is poor, which may lead to reduction in cycling performance of the batteries.

### SUMMARY

This application provides a negative electrode plate including a negative electrode current collector, and a first active layer and a second active layer disposed on at least one surface of the negative electrode current collector, where the first active layer is between the negative electrode current collector and the second active layer, the first active layer includes a first silicon-based material, the second active layer includes a second silicon-based material, a sphericity of the first silicon-based material is greater than a sphericity of the second silicon-based material, and the sphericity of the first silicon-based material is greater than or equal to 0.6.

In the negative electrode plate described above, due to the first silicon-based material and the second silicon-based material with matching suitable sphericities, structural stability of the negative electrode plate can be improved, thereby enhancing cycling performance of a battery.

In some embodiments, the sphericity of the first silicon-based material is 0.6 to 1.

In some embodiments, the sphericity of the second silicon-based material is 0.3 to 0.8.

In some embodiments, a mass percentage of the first silicon-based material relative to an active material in the first active layer is less than or equal to a mass percentage of the second silicon-based material relative to an active material in the second active layer.

In some embodiments, the mass percentage of the first silicon-based material relative to the active material in the first active layer is less than or equal to 15%.

In some embodiments, the mass percentage of the second silicon-based material relative to the active material in the second active layer is 5% to 40%.

In some embodiments, Dᵥ50 of the first silicon-based material is less than or equal to Dᵥ50 of the second silicon-based material.

In some embodiments, Dᵥ50 of the first silicon-based material is 4 µm to 8 µm.

In some embodiments, Dᵥ50 of the second silicon-based material is 6 µm to 10 µm.

In some embodiments, a specific surface area of the first silicon-based material is less than or equal to a specific surface area of the second silicon-based material.

In some embodiments, the specific surface area of the first silicon-based material is 0.5 m²/g to 2.5 m²/g.

In some embodiments, the specific surface area of the second silicon-based material is 1 m²/g to 4 m²/g.

In some embodiments, a thickness of the first active layer is greater than or equal to a thickness of the second active layer.

In some embodiments, the thickness of the first active layer is 20 µm to 40 µm.

In some embodiments, the thickness of the second active layer is 20 µm to 40 µm.

In some embodiments, the first silicon-based material includes the oxygen element.

In some embodiments, a mass percentage of the oxygen element in the first silicon-based material relative to the first silicon-based material is 40% to 60%.

In some embodiments, the second silicon-based material includes the oxygen element.

In some embodiments, a mass percentage of the oxygen element in the second silicon-based material relative to the second silicon-based material is less than or equal to 10%.

In some embodiments, the first silicon-based material includes the carbon element.

In some embodiments, a mass percentage of the carbon element in the first silicon-based material relative to the first silicon-based material is less than or equal to 8%.

In some embodiments, the second silicon-based material includes the carbon element.

In some embodiments, a mass percentage of the carbon element in the second silicon-based material relative to the second silicon-based material is 40% to 60%.

In some embodiments, the first silicon-based material includes a doping metal element, where the doping metal element includes at least one of an alkali metal element and an alkaline earth metal element.

In some embodiments, a mass percentage of the doping metal element relative to the first silicon-based material is less than or equal to 10%.

In some embodiments, a surface of the first silicon-based material and/or a surface of the second silicon-based material is coated with a carbon coating layer.

In some embodiments, a thickness of the carbon coating layer is 10 nm to 300 nm.

In some embodiments, the first active layer further includes first graphite.

In some embodiments, a mass percentage of the first graphite relative to the active material in the first active layer is greater than or equal to 85%.

In some embodiments, the second active layer further includes second graphite.

In some embodiments, a mass percentage of the second graphite relative to the active material in the second active layer is 60% to 95%.

This application further provides a secondary battery including the negative electrode plate.

This application further provides an electric apparatus including at least one of the negative electrode plate and the secondary battery.

### BRIEF DESCRIPTION OF DRAWINGS

To more clearly illustrate the technical solutions of this application, the drawings used in this application are briefly described below. It is clear that the accompanying drawings in the following descriptions show merely some embodiments of this application, and persons of ordinary skill in the art may still derive other drawings from the accompanying drawings without creative efforts.
FIG. 1 is a schematic diagram of a secondary battery according to an embodiment of this application;
FIG. 2 is an exploded view of the secondary battery according to the embodiment of this application shown in FIG. 1; and
FIG. 3 is a schematic diagram of an electric apparatus using a secondary battery as a power source according to an embodiment of this application.

### Descriptions of reference signs:

1. battery cell; 11. housing; 12. electrode assembly; 13. cover plate; and 2. electric apparatus.

To better describe and illustrate the embodiments and/or examples of the inventions disclosed herein, reference may be made to one or more drawings. Additional details or examples used to describe the accompanying drawings should not be construed as limitations on the scope of any one of the disclosed inventions, the currently described embodiments and/or examples, or the presently understood best mode of this application.

### DESCRIPTION OF EMBODIMENTS

To facilitate understanding of this application, a more comprehensive description of this application is provided below with reference to the relevant drawings. Preferred embodiments of this application are shown in the accompanying drawings. However, this application can be implemented in many different forms and is not limited to the embodiments described herein. On the contrary, the purpose of providing these embodiments is to make the understanding of the disclosure of this application more thorough and comprehensive.

Unless otherwise defined, all technical and scientific terms used herein have the same meanings as commonly understood by persons skilled in the art to which this application pertains. The terms used in the specification of this application herein are for the purpose of describing specific embodiments only and are not intended to limit this application. The term "and/or" used herein includes any and all combinations of one or more associated items listed.

A "range" disclosed in this application may be defined in the form of a lower limit and an upper limit, where a given range is defined by selecting a lower limit and an upper limit, and the selected lower limit and upper limit define the boundaries of a particular range. Ranges defined in this manner may include or exclude endpoints, and either endpoint may be independently included or excluded, and any combination may be made, that is, any lower limit may be combined with any upper limit to form a range. For example, if ranges of 60-120 and 80-110 are provided for a specific parameter, it is understood that ranges of 60-110 and 80-120 can also be envisioned. In addition, if minimum range values of 1 and 2 are listed, and if maximum range values of 3, 4, and 5 are listed, the following ranges can all be envisioned: 1-3, 1-4, 1-5, 2-3, 2-4, and 2-5. In this application, unless otherwise stated, a value range of "a-b" is a short representation of any combination of real numbers between a and b, where both a and b are real numbers. For example, a value range of "0-5" means that all real numbers in the range of "0-5" are listed herein, and "0-5" is a short representation of a combination of these values. In addition, a parameter expressed as an integer greater than or equal to 2 is equivalent to indicating that the parameter is, for example, an integer among 2, 3, 4, 5, 6, 7, 8, 9, 10, 11, 12, and so on. For example, when a parameter is described as an integer selected from "2-10", it is equivalent to listing the integers 2, 3, 4, 5, 6, 7, 8, 9, and 10.

In this application, unless specifically specified, the terms such as "a plurality of" and "multiple" refer to a quantity greater than or equal to 2. For example, "one or more" means one or more than two or equal to two.

If not specifically stated, all embodiments and optional embodiments of this application may be combined with each other to form new technical solutions.

Reference to an "embodiment" herein means that a particular feature, structure, or characteristic described with reference to the embodiment may be included in at least one embodiment or implementation of this application. The appearance of this phrase in various places in the specification does not necessarily refer to the same embodiment, nor is it an independent or alternative embodiment mutually exclusive with other embodiments. Persons skilled in the art explicitly and implicitly understand that the embodiments described herein may be combined with other embodiments. The term "implementation" in this application has a similar understanding.

Persons skilled in the art can understand that in the methods described in various implementations or embodiments, the order of steps does not imply a strict execution sequence that imposes any limitation on the implementation process; and the specific execution sequence of each step should be determined by its function and possible inherent logic. If not specifically stated, all steps of this application may be performed sequentially or randomly, preferably sequentially. For example, a method including steps (a) and (b) indicates that the method may include steps (a) and (b) performed in order or may include steps (b) and (a) performed in order. For example, the foregoing method may further include step (c), which indicates that step (c) may be added to the method in any ordinal position, for example, the method may include steps (a), (b), and (c), steps (a), (c), and (b), steps (c), (a), and (b), or the like.

In this application, inclusive technical features or technical solutions described with words such as "containing," "including," or "comprising," unless otherwise specified, do not exclude additional items beyond the listed items and may be regarded as providing both an exclusive feature or solution consisting of the listed items and an inclusive feature or solution including additional items beyond the listed items. For example, A includes a1, a2, and a3; unless otherwise specified, it may also include other items or may not include additional items, and may be regarded as providing both the feature or solution of "A consisting of a1, a2, and a3" and the feature or solution of "A including not only a1, a2, and a3 but also other items."

In this application, unless otherwise specified, A (for example, B) indicates that B is a non-limiting example of A, and it can be understood that A is not limited to B.

In this application, "optionally," "optional," and "option" means being included not be included, that is, either of two parallel solutions "including" or "not including" a feature can be used. If a technical solution mentions multiple "optional" items, unless otherwise specified and provided there are no contradictions or mutual restrictions, each "optional" item is considered independently.

An embodiment of this application provides a negative electrode plate. The negative electrode plate includes a negative electrode current collector, and a first active layer and a second active layer disposed on at least one surface of the negative electrode current collector, where the first active layer is between the negative electrode current collector and the second active layer; the first active layer includes a first silicon-based material; the second active layer includes a second silicon-based material; a sphericity of the first silicon-based material is greater than a sphericity of the second silicon-based material; and the sphericity of the first silicon-based material is greater than or equal to 0.6.

In the negative electrode plate of this embodiment, due to the first silicon-based material and the second silicon-based material with matching suitable sphericities, structural stability of the negative electrode plate can be improved, thereby enhancing cycling performance of a battery.

It can be understood that, in this application, a sphericity represents a ratio of a shortest diameter to a longest diameter of a material. The sphericity can be tested by using the following method: using a Malvern automated image particle size analyzer to capture and process images of dispersed particles in a certain amount (greater than or equal to 20 particles), followed by accurate analysis of the microstructure and morphology of the particles through morphologically-directed Raman spectroscopy (MDRS) to obtain longest diameters and shortest diameters of all particles for calculating a ratio of the shortest diameter to the longest diameter for each particle and a sphericity of each particle, and averaging the sphericities of all particles to obtain an average sphericity.

It can also be understood that, in this application, the sphericity of the first silicon-based material refers to an average sphericity of the first silicon-based material, and the sphericity of the second silicon-based material refers to an average sphericity of the second silicon-based material.

In this application, as some optional examples of the sphericity of the first silicon-based material, the sphericity of the first silicon-based material is 0.6 to 1. For example, the sphericity of the first silicon-based material is 0.6, 0.7, 0.8, 0.9, or 1. When the sphericity of the first silicon-based material is excessively low, the sphericity of the first silicon-based material is poor, and at this time, the first silicon-based material may exhibit a sharp edge. This may increase a risk that the first silicon-based material damages the negative electrode current collector during tablet pressing. In addition, when the sphericity of the first silicon-based material is excessively low, a shape of the first silicon-based material is irregular. This may increase a risk of pulverization of the first silicon-based material during tablet pressing, potentially deteriorating the structural stability of the negative electrode plate and thus affecting the cycling performance of the battery.

In some embodiments, the sphericity of the second silicon-based material is 0.3 to 0.8. Optionally, the sphericity of the second silicon-based material is 0.3, 0.4, 0.5, 0.6, 0.7, or 0.8. When the sphericity of the second silicon-based material is excessively low, a shape of the second silicon-based material is irregular. This may increase a risk of pulverization of the second silicon-based material during tablet pressing, potentially deteriorating the structural stability of the negative electrode plate and thus affecting the cycling performance of the battery. When the sphericity of the second silicon-based material is excessively high, improvement of a compacted density may be limited, thereby restricting further improvement of the compacted density of the negative electrode plate.

In some embodiments, a mass percentage of the first silicon-based material relative to active material in the first active layer is less than or equal to a mass percentage of the second silicon-based material relative to an active material in the second active layer. This can effectively balance high energy density and low swelling rate, helping to maintain a high energy density and good cycling performance of the battery.

Optionally, the mass percentage of the first silicon-based material relative to the active material in the first active layer is less than or equal to 15%. An excessively small mass percentage of the first silicon-based material relative to the active material in the first active layer limits improvement of the energy density of the battery. An excessively large mass percentage of the first silicon-based material relative to the active material in the first active layer may cause significant swelling, easily leading to cycling performance deterioration of the battery. As some examples of the mass percentage of the first silicon-based material relative to the active material in the first active layer, the mass percentage of the first silicon-based material relative to the active material in the first active layer may be 1%, 2%, 5%, 8%, 10%, 12%, or 15%.

Optionally, the mass percentage of the second silicon-based material relative to the active material in the second active layer is 5% to 40%. An excessively small mass percentage of the second silicon-based material in the active material of the second active layer limits effective improvement of the energy density of the battery. An excessively large mass percentage of the second silicon-based material in the active material of the second active layer may cause significant swelling, easily leading to cycling performance deterioration of the battery. As some examples of the mass percentage of the second silicon-based material relative to the active material in the second active layer, the mass percentage of the second silicon-based material relative to the active material in the second active layer may be 5%, 10%, 15%, 20%, 25%, 30%, 35%, or 40%.

In some embodiments, the first silicon-based material includes the oxygen element. Optionally, a mass percentage of the oxygen element in the first silicon-based material relative to the first silicon-based material is 40% to 60%. Further optionally, the mass percentage of the oxygen element in the first silicon-based material relative to the first silicon-based material is 40%, 41%, 42%, 43%, 44%, 45%, 46%, 47%, 48%, 49%, 50%, 51%, 52%, 53%, 54%, 55%, 56%, 57%, 58%, 59%, or 60%. It can be understood that the first silicon-based material is selected from silicon-oxygen materials.

In some embodiments, the second silicon-based material includes the oxygen element. Optionally, a mass percentage of the oxygen element in the second silicon-based material relative to the second silicon-based material is less than or equal to 10%. Further optionally, the mass percentage of the oxygen element in the second silicon-based material relative to the second silicon-based material is less than or equal to 10%, 9%, 8%, 7%, 6%, 5%, 4%, 3%, 2%, or 1%.

In some embodiments, both the first silicon-based material and the second silicon-based material include the oxygen element, and the mass percentage of the oxygen element in the first silicon-based material relative to the first silicon-based material is greater than the mass percentage of the oxygen element in the second silicon-based material relative to the second silicon-based material. This can further reduce the swelling rate of the electrode plate, maintaining the structural stability of the negative electrode plate during charge process.

In some embodiments, the second silicon-based material does not include the oxygen element. That is, a mass percentage of the oxygen element in the second material relative to the second silicon-based material is 0.

In some embodiments, the first silicon-based material includes the carbon element. Optionally, a mass percentage of the carbon element in the first silicon-based material relative to the first silicon-based material is less than or equal to 8%. Further optionally, the mass percentage of the carbon element in the first silicon-based material relative to the first silicon-based material is less than or equal to 7%, 6%, 5%, 4%, 3%, 2%, or 1%. It can be understood that the first silicon-based material may alternatively not include the carbon element.

In some embodiments, the second silicon-based material includes the carbon element. Optionally, a mass percentage of the carbon element in the second silicon-based material relative to the second silicon-based material is 40% to 60%. Further optionally, the mass percentage of the carbon element in the second silicon-based material relative to the second silicon-based material is 40%, 41%, 42%, 43%, 44%, 45%, 46%, 47%, 48%, 49%, 50%, 51%, 52%, 53%, 54%, 55%, 56%, 57%, 58%, 59%, or 60%. It can be understood that the second silicon-based material is selected from silicon-carbon composites.

In some embodiments, both the first silicon-based material and the second silicon-based material include the carbon element, and the mass percentage of the carbon element in the first silicon-based material relative to the first silicon-based material is less than the mass percentage of the carbon element in the second silicon-based material relative to the second silicon-based material.

In some embodiments, the first silicon-based material is selected from silicon-oxygen materials. The second silicon-based material is selected from silicon-carbon composites.

In some embodiments, the silicon-oxygen material may be prepared by using the following method.

S101: Silicon and silicon dioxide are provided, with a molar ratio of silicon to silicon dioxide of 1:1, to obtain a mixture. Optionally, metallic magnesium is added, with a mass percentage of 7% to 10% relative to the mixture.

S102: According to a vapor deposition method, the mixture from S101 is heated to 1100 degrees Celsius (°C) to 1500°C to form a vapor, and then the vapor is cooled to 700°C to 900°C to form a deposit.

S103: The deposit is pulverized to obtain a pulverized product with a suitable particle size, the pulverized material is placed in a CVD rotary furnace, an organic gas source is introduced for deposition at 600°C to 1000°C for 1 hour (h) to 6 h, and sieving and demagnetization are performed to obtain the silicon-oxygen material. Optionally, the organic gas source includes a gaseous carbon source. Further optionally, the carbon source includes at least one of alkane and alkyne.

Further optionally, pre-lithiation is performed on the silicon-oxygen material obtained from S103.

Still further optionally, post-coating is performed on the silicon-oxygen material. Optionally, the post-coating is inorganic coating performed with a salt such as a phosphate and/or silicate. The post-coating may be implemented as liquid-phase coating.

In some embodiments, the silicon-carbon composite may be prepared by using the following method.

S201: A carbonaceous precursor is provided. The carbonaceous precursor may be at least one of a biomass precursor and a resin precursor. Optionally, the biomass precursor may be at least one of coconut shell-based biomass and starch-based biomass.

S202: The carbonaceous precursor is carbonized in a nitrogen atmosphere at 600°C to 1000°C for 2 h to 10 h to obtain porous carbon.

S203: The porous carbon is heated in an atmosphere containing a silicon source gas, and elemental silicon is deposited in pores of the porous carbon to obtain the silicon-carbon composite.

Optionally, carbon coating is performed on the silicon-carbon composite obtained from S203.

It can be understood that silicon-oxygen material and silicon-carbon composite are also commercially available.

In some embodiments, the first silicon-based material includes a doping metal element, where the doping metal element includes at least one of an alkali metal element and an alkaline earth metal element. The introduction of the doping metal element can improve first cycle efficiency of the battery. Optionally, a mass percentage of the doping metal element relative to the first silicon-based material is less than or equal to 10%. Further optionally, the mass percentage of the doping metal element relative to the first silicon-based material is less than or equal to 9%, 8%, 7%, 6%, 5%, 4%, 3%, 2%, or 1%. It can be understood that the alkali metal element includes at least one of the lithium element, sodium element, potassium element, rubidium element, and cesium element. The alkaline earth metal element includes at least one of the beryllium element, magnesium element, calcium element, strontium element, and barium element. Further optionally, the first silicon-based material includes a pre-lithiated silicon-based material and pre-magnesiated silicon-based material.

In some embodiments, a surface of the first silicon-based material is coated with a carbon coating layer, and a thickness of the coating layer is 10 nanometers (nm) to 300 nm. Optionally, the thickness of the carbon coating layer on the surface of the first silicon-based material is 10 nm, 50 nm, 100 nm, 150 nm, 200 nm, 250 nm, or 300 nm.

In some embodiments, a surface of the second silicon-based material is coated with a carbon coating layer, and a thickness of the coating layer is 10 nm to 300 nm. Optionally, the thickness of the carbon coating layer on the surface of the second silicon-based material is 10 nm, 50 nm, 100 nm, 150 nm, 200 nm, 250 nm, or 300 nm.

In some embodiments, the first active layer further includes first graphite. Optionally, a mass percentage of the first graphite in the active material of the first active layer is greater than or equal to 85%. Optionally, the mass percentage of the first graphite in the active material of the first active layer is 85%, 88%, 90%, 92%, 95%, 98%, or 99%. Further optionally, the mass percentage of the first graphite in the active material of the first active layer is 85% to 99%.

In some embodiments, the second active layer further includes second graphite. Optionally, a mass percentage of the second graphite in the active material of the second active layer is 60% to 95%. Optionally, a mass percentage of the second graphite in the active material of the second active layer is 60%, 65%, 70%, 75%, 80%, 85%, 90%, or 95%.

It can be understood that types and amounts of the first silicon-based material, the first graphite, the second silicon-based material, the second graphite, the oxygen element in the first silicon-based material, the carbon element in the first silicon-based material, the doping metal element in the first silicon-based material, the oxygen element in the second silicon-based material, the carbon element in the second silicon-based material, and the like are tested through cross section polishing (CP) combined with scanning electron microscopy (SEM), energy dispersive spectroscopy (EDS), inductively coupled plasma spectroscopy (ICP), and the like.

Another embodiment of this application provides a secondary battery. The secondary battery includes the negative electrode plate described above.

Another embodiment of this application provides an electric apparatus. The electric apparatus includes at least one of the negative electrode plate described above and the secondary battery described above.

The secondary battery and electric apparatus of this application are described below with appropriate reference to the drawings.

Typically, a secondary battery includes a positive electrode plate, a negative electrode plate, an electrolyte, and a separator. During charge/discharge of the battery, active ions intercalate and deintercalate between the positive electrode plate and the negative electrode plate. The electrolyte conducts ions between the positive electrode plate and the negative electrode plate. The separator is disposed between the positive electrode plate and the negative electrode plate, primarily to prevent short-circuit between the positive electrode and negative electrode and allow ions to pass through.

### Positive electrode plate

The positive electrode plate includes a positive electrode current collector and a positive electrode film layer disposed on at least one surface of the positive electrode current collector, and the positive electrode film layer includes a positive electrode active material.

As a non-limiting example, the positive electrode current collector has two opposite surfaces in a thickness direction of the positive electrode current collector, and the positive electrode active material layer is disposed on either or both of the two opposite surfaces of the positive electrode current collector.

In some embodiments, the positive electrode current collector is a metal foil or a composite current collector. For example, an aluminum foil is used as the metal foil. The composite current collector may include a polymer material substrate and a metal layer formed on at least one surface of the polymer material substrate. The composite current collector may be obtained by forming a metal material on the polymer material substrate. Non-limiting examples of the metal material in the positive electrode current collector may include one or more of aluminum, aluminum alloy, nickel, nickel alloy, titanium, titanium alloy, silver, and silver alloy. Non-limiting examples of the polymer material substrate in the positive electrode current collector may include one or more of polypropylene (PP), polyethylene terephthalate (PET), polybutylene terephthalate (PBT), polystyrene (PS), and polyethylene (PE) substrates.

In some embodiments, the positive electrode active material is a positive electrode active material known in the art for batteries. As non-limiting examples, the positive electrode active material may include one or more of the following materials: a lithium-containing phosphate with an olivine structure, a lithium transition metal oxide, and their respective modified compounds. However, this application is not limited to these materials, and other conventional materials that can be used as positive electrode active materials for batteries may be used. These positive electrode active materials are used alone or in combination of two or more. Examples of lithium transition metal oxide may include, but are not limited to, one or more of lithium cobalt oxide (such as LiCoO₂), lithium nickel oxide, lithium manganese oxide, lithium nickel cobalt oxide, lithium manganese cobalt oxide, lithium nickel manganese oxide, lithium nickel cobalt manganese oxide, lithium nickel cobalt aluminum oxide, and their modified compounds. Non-limiting examples of the lithium-containing phosphate with an olivine structure may include, but are not limited to, one or more of lithium iron phosphate, a composite material of lithium iron phosphate and carbon, lithium manganese phosphate, a composite material of lithium manganese phosphate and carbon, lithium manganese iron phosphate, and a composite material of lithium manganese iron phosphate and carbon. Non-limiting examples of the lithium cobalt oxide may include LiCoO₂. Non-limiting examples of lithium nickel oxide may include LiNiO₂. Non-limiting examples of lithium manganese oxide may include LiMnO₂, LiMn₂O₄, and the like. Non-limiting examples of lithium nickel cobalt manganese oxide may include LiNi_{1/3}Co_{1/3}Mn_{1/3}O₂ (also referred to as NCM333), LiNi_{0.5}Co_{0.2}Mn_{0.3}O₂ (also referred to as NCM523), LiNi_{0.5}Co_{0.25}Mn_{0.25}O₂ (also referred to as NCM211), LiNi_{0.6}Co_{0.2}Mn_{0.2}O₂ (also referred to as NCM622), LiNi_{0.8}Co_{0.1}Mn_{0.1}O₂ (also referred to as NCM811), and the like. Non-limiting examples of lithium nickel cobalt aluminum oxide may include LiNi_{0.8}Co_{0.15}Al_{0.05}O₂.

In some embodiments, the positive electrode active material layer may further optionally include a binder. As non-limiting examples, the binder may include one or more of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylate resin.

In some embodiments, the positive electrode active material layer may further optionally include a conductive agent. As non-limiting examples, the conductive agent may include one or more of superconducting carbon, acetylene black, carbon black, Ketjen black, carbon dots, carbon nanotubes, graphene, and carbon nanofibers.

In some embodiments, the positive electrode plate is prepared by using the following method: components for preparing the positive electrode plate, such as the positive electrode active material, the conductive agent, the binder, and any other components, are dispersed in a solvent to form a positive electrode slurry; the positive electrode slurry is applied to at least one surface of the positive electrode current collector; and after processes such as drying and cold pressing, the positive electrode plate is obtained. The solvent may be selected from, but not limited to, any of those in the embodiments described above, such as N-methylpyrrolidone (NMP). The positive electrode slurry on the surface of the positive electrode current collector is applied to a single surface or two surfaces of the positive electrode current collector. A solid content of the positive electrode slurry is 40 weight percentage (wt%) to 80wt%. A viscosity of the positive electrode slurry at room temperature is adjusted to 5000 millipascal-seconds (mPa·s) to 25000 mPa·s. During application of the positive electrode slurry, based on dry weight (excluding the solvent), a surface density per unit area for coating may be 150 milligrams per square centimeter (mg/m²) to 350 mg/m². A compacted density of the positive electrode plate may be 3.0 grams per cubic centimeter (g/cm³) to 3.6 g/cm³, optionally 3.3 g/cm³ to 3.5 g/cm³.

### Negative electrode plate

The negative electrode plate includes a negative electrode current collector and a negative electrode active material layer disposed on at least one surface of the negative electrode current collector, and the negative electrode active material layer includes a negative electrode active material.

As a non-limiting example, the negative electrode current collector has two opposite surfaces in a thickness direction of the negative electrode current collector, and the negative electrode active material layer is disposed on either or both of the two opposite surfaces of the negative electrode current collector.

In some embodiments, the negative electrode current collector may be a metal foil or a composite current collector. For example, a copper foil is used as the metal foil. The composite current collector may include a polymer material substrate and a metal layer formed on at least one surface of the polymer material substrate. The composite current collector may be obtained by forming a metal material on the polymer material substrate. Non-limiting examples of the metal material in the negative electrode current collector may include one or more of copper, copper alloy, nickel, nickel alloy, titanium, titanium alloy, silver, and silver alloy. Non-limiting examples of the polymer material substrate in the negative electrode current collector may include one or more of polypropylene (PP), polyethylene terephthalate (PET), polybutylene terephthalate (PBT), polystyrene (PS), and polyethylene (PE) substrates.

In some embodiments, the negative electrode active material may be a negative electrode active material known in the art for batteries. As non-limiting examples, the negative electrode active material may include one or more of the following materials: artificial graphite, natural graphite, soft carbon, hard carbon, a silicon-based material, a tin-based material, and lithium titanate. The silicon-based material may include one or more of elemental silicon, a silicon-oxygen compound, a silicon-carbon composite, a silicon-nitrogen composite, and silicon alloy. The tin-based material may include one or more of elemental tin, a tin-oxygen compound, and tin alloy. However, this application is not limited to these materials, and other conventional materials that can be used as negative electrode active materials for batteries may be used. These negative electrode active materials are used alone or in combination of two or more.

In some embodiments, the negative electrode active material layer may further optionally include a binder. The binder may include one or more of styrene-butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode active material layer may further optionally include a conductive agent. The conductive agent may include one or more of superconducting carbon, acetylene black, carbon black, Ketjen black, carbon dots, carbon nanotubes, graphene, and carbon nanofibers.

In some embodiments, the negative electrode active material layer may further optionally include other additives, such as a thickener (for example, sodium carboxymethyl cellulose (CMC-Na)).

In some embodiments, the negative electrode plate is prepared by using the following method: components for preparing the negative electrode plate, such as the negative electrode active material, the conductive agent, the binder, and any other components, are dispersed in a solvent (a non-limiting example of the solvent is deionized water) to form a negative electrode slurry; the negative electrode slurry is applied to at least one surface of the negative electrode current collector; and after processes such as drying and cold pressing, the negative electrode plate is obtained. The negative electrode slurry on the surface of the negative electrode current collector is applied to a single surface or two surfaces of the negative electrode current collector. A solid content of the negative electrode slurry was 40wt% to 60wt%. A viscosity of the negative electrode slurry at room temperature is adjusted to 2000 mPa·s to 10000 mPa·s. During application of the negative electrode slurry, based on dry weight (excluding the solvent), a surface density per unit area for coating may be 75 grams per square meter (g/m²) to 220 g/m². A compacted density of the negative electrode plate may be 1.0 g/cm³ to 1.8 g/cm³.

### Electrolyte

The electrolyte serves to conduct ions between the positive electrode plate and the negative electrode plate. A type of the electrolyte is not particularly limited in this application, and can be selected based on requirements. For example, the electrolyte may be in a liquid state, a gel state, or an all-solid state.

In some embodiments, the electrolyte is a liquid electrolyte. The liquid electrolyte includes an electrolytic salt and a solvent.

In some embodiments, the electrolytic salt may include one or more of lithium hexafluorophosphate (LiPF₆), lithium tetrafluoroborate (LiBF₄), lithium perchlorate (LiClO₄), lithium hexafluoroarsenate (LiAsF₆), lithium bis(fluorosulfonyl)imide (LiFSI), lithium bis(trifluoromethanesulfonyl)imide (LiTFSI), lithium trifluoromethanesulfonate (LiTFS), lithium difluorophosphate (LiPO₂F₂), lithium difluoro(oxalato)borate (LiDFOB), lithium bis(oxalato)borate (LiBOB), lithium difluoro(bisoxalato)phosphate (LiDFOP), and lithium tetrafluoro(oxalato)phosphate (LiTFOP).

In some embodiments, the solvent may include one or more of ethylene carbonate (EC, 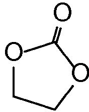 ), propylene carbonate (PC, 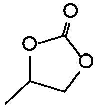 ), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate ( 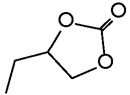 ), fluoroethylene carbonate (FEC), methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, methyl ethyl sulfone, and diethyl sulfone.

In some embodiments, the liquid electrolyte may further optionally include an additive. For example, the additive may include a negative electrode film-forming additive or a positive electrode film-forming additive, or include an additive capable of improving certain performance of a battery, such as an additive for improving overcharge performance of the battery, or an additive for improving high-temperature or low-temperature performance of the battery.

In some embodiments, the additive in the liquid electrolyte may include, but is not limited to, one or more of fluoroethylene carbonate (FEC), difluoroethylene carbonate (DFEC), and trifluoromethyl ethylene carbonate (TFPC).

### Separator

In some embodiments, the secondary battery further includes a separator. A type of the separator is not particularly limited in this application, and any well-known porous-structure separator with good chemical and mechanical stability may be selected.

In some embodiments, a material of the separator may include one or more of glass fiber, non-woven fabric, polyethylene, polypropylene, and polyvinylidene fluoride. The separator may a single-layer film or a multilayer composite film. This is not particularly limited. When the separator was a multilayer composite film, materials of the layers may be the same or different. This is not particularly limited.

In some embodiments, a thickness of the separator is 6 micrometers (µm) to 40 µm, and optionally 12 µm to 20 µm.

In some embodiments, the positive electrode plate, the negative electrode plate, and the separator may be manufactured into an electrode assembly through winding or lamination.

In some embodiments, the secondary battery may include an outer package. The outer package may be used to encapsulate the electrode assembly and the electrolyte described above.

In some embodiments, the outer package of the secondary battery may be a hard shell, such as a hard plastic shell, an aluminum shell, or a steel shell. Alternatively, the outer package of the secondary battery may be a soft pack, such as a soft pouch. A material of the soft pack may be plastic, and further, non-limiting examples of the plastic may include one or more of polypropylene, polybutylene terephthalate, and polybutylene succinate.

The secondary battery includes at least one battery cell. The secondary battery may include one or more battery cells.

In this application, unless otherwise specified, a "battery cell" refers to a basic unit capable of conversion between chemical energy and electrical energy, and typically includes at least a positive electrode plate, a negative electrode plate, and an electrolyte. During charge/discharge of the battery, active ions intercalate and deintercalate back and forth between the positive electrode plate and the negative electrode plate. The electrolyte conducts the active ions between the positive electrode plate and the negative electrode plate.

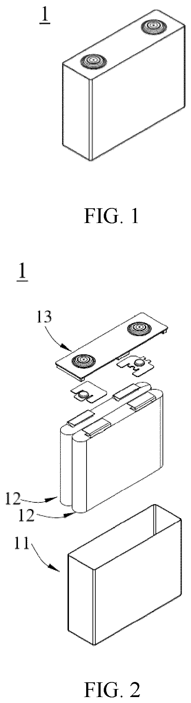

A shape of the battery cell is not particularly limited in this application, and the battery cell may be cylindrical, rectangular, or of any other shape. For example, FIG. 1 shows a rectangular battery cell 1 as an example.

In some embodiments, referring to FIG. 2, the outer package may include a housing 11 and a cover plate 13. The housing 11 may include a bottom plate and a side plate connected to the bottom plate, where the bottom plate and the side plate enclose an accommodating cavity. The housing 11 has an opening communicating with the accommodating cavity, and the cover plate 13 is capable of covering the opening to seal the accommodating cavity. The positive electrode plate, the negative electrode plate, and the separator are manufactured into an electrode assembly 12 through winding or lamination. The electrode assembly 12 is encapsulated in the accommodating cavity. The electrolyte infiltrates the electrode assembly 12. One or more electrode assemblies 12 are contained in the battery cell 1, and persons skilled in the art can make selections according to actual needs.

The secondary battery may be a battery module or a battery pack.

The battery module includes at least one battery cell. The battery module may contain one or more battery cells, and persons skilled in the art can appropriately make selections based on application and a capacity of the battery module.

In the battery module, multiple battery cells are arranged sequentially along a length direction of the battery module, or they are arranged in any other manner. Further, the multiple battery cells are fastened by fasteners.

Optionally, the battery module may further include a housing with an accommodating space, and the multiple battery cells are accommodated in the accommodating space.

In some embodiments, the battery module described above is assembled into a battery pack, and the battery pack may contain one or more battery modules, and persons skilled in the art may appropriately make selections based on application and a capacity of the battery pack.

The battery pack may include a battery box and multiple battery modules arranged in the battery box. The battery box includes an upper box body and a lower box body, where the upper box body is capable of covering the lower box body to form the enclosed space for accommodating the battery module. The multiple battery modules may be arranged in the battery box in any manner.

In addition, this application further provides an electric apparatus, where the electric apparatus includes the secondary battery provided by this application. The secondary battery may be used as a power source for the electric apparatus or as an energy storage unit for the electric apparatus. The electric apparatus may include, but is not limited to, mobile devices, electric vehicles, electric trains, ships, satellites, and energy storage systems. The mobile devices may be, for example, mobile phones, notebook computers, and the like. For example, the electric vehicles may be, but are not limited to, battery electric vehicles, hybrid electric vehicles, plug-in hybrid electric vehicles, electric bicycles, electric scooters, electric golf carts, electric trucks, and the like.

As an electric apparatus, the secondary battery may be selected based on a usage requirement.

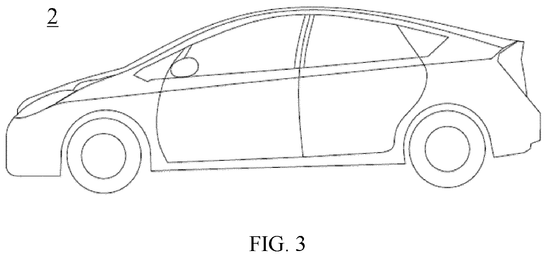

FIG. 3 shows an electric apparatus 2 as an example. This electric apparatus is a battery electric vehicle, a hybrid electric vehicle, a plug-in hybrid electric vehicle, or the like. To satisfy requirements of the electric apparatus for high power and high energy density of the secondary battery, a battery pack or battery module may be used.

In another example, the apparatus may be a mobile phone, a tablet computer, a notebook computer, or the like. The apparatus is typically light and thin, and a secondary battery may be used as a power source.

To make the technical problems solved by this application, the technical solutions, and the beneficial effects clearer, this application is further described in detail below based on examples and drawings. It is clear that the described examples are merely some but not all of the examples of this application. The following description of at least one illustrative example is merely for explanation and is not construed as any limitation on this application or on the use of this application. All other examples obtained by persons of ordinary skill in the art based on the examples of this application without creative efforts fall within the protection scope of this application.

Examples whose technical solutions or conditions are not specified are made in accordance with technical solutions or conditions described in the literature in the field or in accordance with product instructions. The reagents or instruments used are all conventional products commercially available if no manufacturer is indicated.

A preparation method of the secondary battery was as follows.

### (1) Preparation of negative electrode plate

First graphite, a first silicon-based material, a conductive agent acetylene black, a thickener sodium carboxymethyl cellulose, and a binder styrene-butadiene rubber were mixed, and deionized water was added, to obtain a first slurry with a solid content of 49% after vacuum stirring.

Second graphite, a second silicon-based material, a conductive agent acetylene black, a thickener sodium carboxymethyl cellulose, and a binder styrene-butadiene rubber were mixed, and deionized water was added, to obtain a second slurry with a solid content of 49% after vacuum stirring.

The first slurry was applied to a current collector copper foil, and dried at 85°C, forming a first active layer on the current collector. Then, the second slurry was applied to the first active layer, dried at 85°C, underwent cold-pressing, trimming, slitting, and cutting, and finally dried under vacuum at 120°C for 12 h to obtain the negative electrode plate.

### (2) Preparation of positive electrode plate

A positive electrode active material NCM, a binder polyvinylidene fluoride, and a conductive agent acetylene black were mixed at a ratio of 97:2:1, then a solvent N-methylpyrrolidone (NMP) was added and stirred to form a positive electrode slurry. The positive electrode slurry was uniformly applied to a positive electrode current collector aluminum foil, and after drying and cold pressing, the positive electrode plate was obtained.

### (3) Preparation of electrolyte

Ethylene carbonate (EC), ethyl methyl carbonate (EMC), and diethyl carbonate (DEC) were mixed uniformly at a volume ratio of 20:20:60 as an organic solvent, then LiPF₆ was dissolved in the organic solvent, and fluoroethylene carbonate (FEC) was added, with a concentration of LiPF₆ in the electrolyte being 1 mole per liter (mol/L) and a mass percentage of FEC being 5wt%.
(4) The separator was a Celgard 2400 separator.
(5) The negative electrode plate, separator, and positive electrode plate were stacked in order and wound to obtain a wound cell. A designed capacity of the cell was 4.5 ampere-hours (Ah). The cell was placed in an outer package of rectangular aluminum shell and dried, and the electrolyte was injected. After processes such as encapsulation, standing, formation, aging, secondary encapsulation, and capacity testing, the secondary battery was obtained.

The compositions of the negative electrode plates in the examples and comparative examples are shown in Table 1.

### Test examples

(1) Test for energy density of battery: At 25°C, the prepared battery was fully discharged at 1 Coulomb (C), then fully charged at a rate of 1C and fully discharged at a rate of 1C, and current actual discharge energy at that point was recorded. At 25°C, an effective length, width, and thickness of the cell fully charged at 1C were measured, and an effective volume V was calculated. A ratio of the actual discharge energy D of the battery at 1C to the effective volume V of the cell was an actual energy density E of the battery, and E=D/V, where D was measured in watt-hour (Wh), and V was measured in liter (L).
(2) Test for structural stability of electrode plate: The obtained battery was fully charged at 1C, disassembled to obtain the negative electrode plate, folded transversely along a large surface, and rolled once with a 1-kilogram (kg) standard roller along a fold line. The folding and rolling operations were repeated three times, and light transmission or fracture of the electrode plate at the fold was observed. The severity was graded based on four levels: 1. fracture: the electrode plate was broken; 2. severe light transmission: more than 5 light transmission points; 3. slight light transmission: 1 to 5 light transmission points; and 4. no light transmission.
(3) Test for cycling performance of battery: The prepared battery was subjected to 0.5C/1C cycling test at 25°C, and the number of cycles at capacity decayed to 80% was recorded as corresponding cycling performance of the battery.
(4) Test for swelling rate of negative electrode plate: A fresh cell subjected to formation was fully charged at 0.33C/0.33C, disassembled in a dry room to obtain the negative electrode plate. A thickness of the fully charged electrode plate was measured, and a swelling rate was calculated compared with a cold-pressed thickness of the electrode plate. Swelling rate=(thickness of fully charged negative electrode plate-thickness of cold-pressed negative electrode plate)/thickness of cold-pressed negative electrode plate×100%.

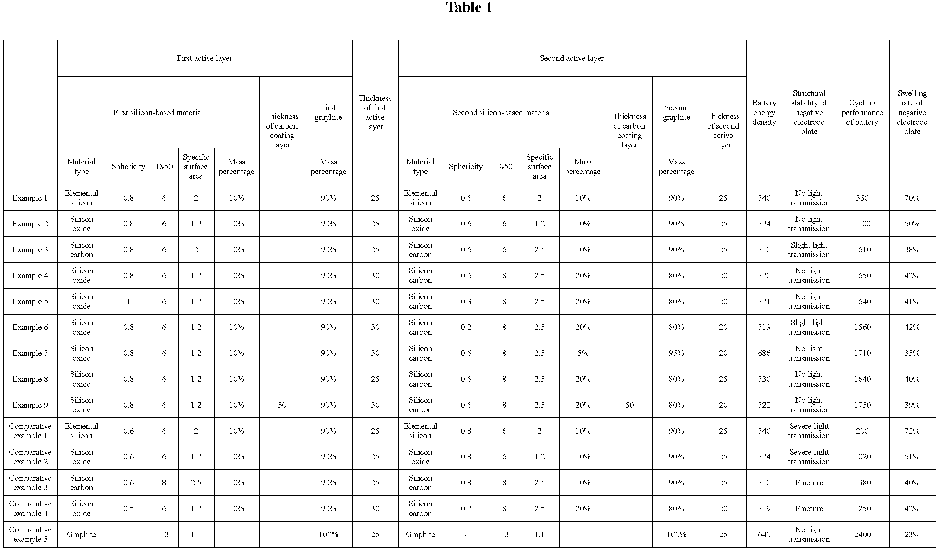

It can be understood that, in Table 1, "silicon oxide" refers to a silicon-oxygen material, and "silicon carbon" refers to a silicon-carbon composite. In Table 1, Dᵥ50 is measured in micrometer (µm); the specific surface area is measured in square meters per gram (m²/g); the thickness of the first active layer is measured in µm, the thickness of the second active layer is measured in µm; the thickness of the carbon coating layer is measured in nm; the battery energy density is measured in watt-hours per liter (Wh/L); the cycling performance of the battery is measured in cycles; the mass percentage of the first silicon-based material refers to the mass percentage of the first silicon-based material relative to the active material in the first active layer; the mass percentage of the first graphite refers to the mass percentage of the first graphite relative to the active material in the first active layer; the mass percentage of the second silicon-based material refers to the mass percentage of the second silicon-based material relative to the active material in the first active layer; and the mass percentage of the second graphite refers to the mass percentage of the second graphite relative to the active material in the second active layer.

From Table 1, it can be learned that when the negative electrode plate includes the silicon-based material, the energy density of the battery is higher. When the sphericity of the first silicon-based material is greater than the sphericity of the second silicon-based material, the structural stability of the negative electrode plate is better, and the battery exhibits better cycling performance. When the sphericity of the first silicon-based material is less than the sphericity of the second silicon-based material, the structural stability of the negative electrode plate is poorer, and the battery correspondingly exhibits poorer cycling performance.

The technical features of the embodiments described above can be arbitrarily combined. To keep the description concise, not all possible combinations of the technical features in the embodiments described above are described. However, as long as there is no contradiction in the combination, the technical features should be considered within the scope of this specification.

The foregoing embodiments only represent several implementations of this application, and the descriptions thereof are specific and detailed but should not be construed as limitations on the scope of this patent. It should be noted that, for persons of ordinary skill in the art, several variations and improvements can be made without departing from the concept of this application, and fall within the protection scope of this application. Therefore, the protection scope of this patent shall be subject to the appended claims.

## Claims

1. A negative electrode plate, comprising a negative electrode current collector, and a first active layer and a second active layer disposed on at least one surface of the negative electrode current collector, wherein the first active layer is between the negative electrode current collector and the second active layer, the first active layer comprises a first silicon-based material, the second active layer comprises a second silicon-based material, a sphericity of the first silicon-based material is greater than a sphericity of the second silicon-based material, and the sphericity of the first silicon-based material is greater than or equal to 0.6.

2. The negative electrode plate according to claim 1, wherein the sphericity of the first silicon-based material is 0.6 to 1; and/or
the sphericity of the second silicon-based material is 0.3 to 0.8.

3. The negative electrode plate according to claim 1 or 2, wherein a mass percentage of the first silicon-based material relative to an active material in the first active layer is less than or equal to a mass percentage of the second silicon-based material relative to an active material in the second active layer.

4. The negative electrode plate according to claim 3, wherein the mass percentage of the first silicon-based material relative to the active material in the first active layer is less than or equal to 15%.

5. The negative electrode plate according to claim 3 or 4, wherein the mass percentage of the second silicon-based material relative to the active material in the second active layer is 5% to 40%.

6. The negative electrode plate according to any one of claims 1 to 5, wherein Dᵥ50 of the first silicon-based material is less than or equal to Dᵥ50 of the second silicon-based material.

7. The negative electrode plate according to claim 6, wherein Dᵥ50 of the first silicon-based material is 4 µm to 8 µm.

8. The negative electrode plate according to claim 6 or 7, wherein Dᵥ50 of the second silicon-based material is 6 µm to 10 µm.

9. The negative electrode plate according to any one of claims 1 to 8, wherein a specific surface area of the first silicon-based material is less than or equal to a specific surface area of the second silicon-based material.

10. The negative electrode plate according to claim 9, wherein the specific surface area of the first silicon-based material is 0.5 m²/g to 2.5 m²/g.

11. The negative electrode plate according to claim 9 or 10, wherein the specific surface area of the second silicon-based material is 1 m²/g to 4 m²/g.

12. The negative electrode plate according to any one of claims 1 to 11, wherein a thickness of the first active layer is greater than or equal to a thickness of the second active layer.

13. The negative electrode plate according to claim 12, wherein the thickness of the first active layer is 20 µm to 40 µm.

14. The negative electrode plate according to claim 12 or 13, wherein the thickness of the second active layer is 20 µm to 40 µm.

15. The negative electrode plate according to any one of claims 1 to 14, wherein the first silicon-based material comprises the oxygen element.

16. The negative electrode plate according to claim 14, wherein a mass percentage of the oxygen element in the first silicon-based material relative to the first silicon-based material is 40% to 60%.

17. The negative electrode plate according to any one of claims 1 to 16, wherein the second silicon-based material comprises the oxygen element.

18. The negative electrode plate according to claim 17, wherein a mass percentage of the oxygen element in the second silicon-based material relative to the second silicon-based material is less than or equal to 10%.

19. The negative electrode plate according to any one of claims 1 to 18, wherein the first silicon-based material comprises the carbon element.

20. The negative electrode plate according to claim 19, wherein a mass percentage of the carbon element in the first silicon-based material relative to the first silicon-based material is less than or equal to 8%.

21. The negative electrode plate according to any one of claims 1 to 20, wherein the second silicon-based material comprises the carbon element.

22. The negative electrode plate according to claim 21, wherein a mass percentage of the carbon element in the second silicon-based material relative to the second silicon-based material is 40% to 60%.

23. The negative electrode plate according to any one of claims 1 to 22, wherein the first silicon-based material comprises a doping metal element; and the doping metal element comprises at least one of an alkali metal element and an alkaline earth metal element.

24. The negative electrode plate according to claim 23, wherein a mass percentage of the doping metal element relative to the first silicon-based material is less than or equal to 10%.

25. The negative electrode plate according to any one of claims 1 to 24, wherein a surface of the first silicon-based material and/or a surface of the second silicon-based material is coated with a carbon coating layer.

26. The negative electrode plate according to claim 25, wherein a thickness of the carbon coating layer is 10 nm to 300 nm.

27. The negative electrode plate according to any one of claims 1 to 26, wherein the first active layer further comprises first graphite.

28. The negative electrode plate according to claim 27, wherein a mass percentage of the first graphite relative to the active material in the first active layer is greater than or equal to 85%.

29. The negative electrode plate according to any one of claims 1 to 28, wherein the second active layer further comprises second graphite.

30. The negative electrode plate according to claim 29, wherein a mass percentage of the second graphite relative to the active material in the second active layer is 60% to 95%.

31. A secondary battery, comprising the negative electrode plate according to any one of claims 1 to 30.

32. An electric apparatus, comprising at least one of the negative electrode plate according to any one of claims 1 to 30 and the secondary battery according to claim 31.
